# EUROPEAN PATENT SPECIFICATION

(11) **EP 4 224 231 B1**
(45) Date of publication and mention of the grant of the patent: **18.11.2026**
(21) Application number: 21888332.0
(22) Date of filing: 28.09.2021
(51) Int. Cl.: G02B 6/54, G02B 6/38, G02B 6/44

(54) **PREFABRICATED CABLE**
VORGEFERTIGTES KABEL
CÂBLE PRÉFABRIQUÉ

(30) Priority: 09.11.2020 CN 202022577615 U
(43) Date of publication of application: 09.08.2023
(73) Proprietor: Huawei Technologies Co., Ltd., Shenzhen, Guangdong 518129 (CN)
(72) Inventor: ZHANG, Jinxing, Shenzhen, Guangdong 518129 (CN); XIONG, Wei, Shenzhen, Guangdong 518129 (CN); ZHANG, Zhijian, Shenzhen, Guangdong 518129 (CN)
(74) Representative: MERH-IP Matias Erny Reichl Hoffmann Patentanwälte PartG mbB
(86) International application number: PCT/CN2021/121332
(87) International publication number: WO 2022/095635

(56) References cited:
- CN-A- 102 822 709
- CN-U- 203 941 733
- CN-U- 214 097 898
- JP-A- 2010 231 047
- JP-A- 2017 181 840
- US-A- 5 480 203
- US-A1- 2011 150 398
- US-A1- 2018 067 275

## Description

### TECHNICAL FIELD

This application relates to the field of communication technologies, and in particular, to a prefabricated cable.

### BACKGROUND

With rapid development of optical distribution networks (optical distribution networks, ODNs), prefabricated cables are more widely used. The prefabricated cable includes an optical cable and an optical fiber connector. One or each of two ends of the optical cable is connected to an optical fiber connector. To use the prefabricated cable, the optical fiber connector is directly plugged to a device that needs to be connected, without fusion splicing. Such a plug-and-play fast network construction mode is very convenient.

However, during network construction, construction personnel are likely to drag the optical fiber connector with a hand to pull the prefabricated cable. Because the optical fiber connector has a precise structure, and a connection part between the optical fiber connector and the optical cable is relatively fragile, the prefabricated cable is easily damaged during network construction.
Document US 2011/150398 A1 relates to a drop cable assembly that includes a fiber optic drop cable having a length that extends from a first end of the fiber optic drop cable to an opposite second end of the fiber optic drop cable. The fiber optic drop cable also includes an intermediate location located between the first and second ends of the fiber optic drop cable. The drop cable assembly also includes a first fiber optic connector mounted at the first end of the fiber optic drop cable and a second fiber optic connector mounted at the second end of the fiber optic drop cable. The drop cable assembly further includes an optical fiber that extends continuously without splicing along the length of the fiber optic drop cable from the first fiber optic connector to the second fiber optic connector. The fiber optic drop cable has a first cable segment that extends from the first end of the fiber optic drop cable to the intermediate location and a second cable segment that extends from the intermediate location to the second end of the fiber optic drop cable. The first cable segment is more robust than the second cable segment and the second cable segment being more flexible than the first cable segment. Document US 2018/067275 A1 relates to a puller for pulling an optic cable. The puller comprises a housing slideable along the cable to abut the collar and a pulling wire attached to the housing for pulling the collar and cable. Document US 5480203 A relates to a pulling tool for gripping a cable or cables, such as fiber optic cables. The pulling tool has a mesh sleeve with an open tail end for receiving the ends of the cables, and a closed lead end with a ring or pulling member coupled thereto.

### SUMMARY

The invention is provided by a prefabricated cable in accordance with claim 1.

Preferred embodiments are defined in the dependent claims.

The optical cable is a communication cable component that is manufactured to meet optical, mechanical, and environmental performance specifications, uses one or more optical fibers in a jacket as a transmission medium, and can be used independently or in a group. Based on forms of optical cables, optical cables may be classified into an optical cable with an optical cable suspension wire and an optical cable without an optical cable suspension wire. When an optical cable with an optical cable suspension wire is in an initial state, the optical cable suspension wire is combined with the optical cable along a length direction. A function of the optical cable suspension wire is to ensure that the optical cable can bear its own weight under gravity and an external load in an aerial (or referred to as suspended) state, to strengthen the optical cable. An optical cable without an optical cable suspension wire has high material strength, and can bear its own weight under gravity and an external load in an aerial mode even without an optical cable suspension wire.

An optical cable provided in an embodiment of this application sequentially includes an insertion section, an optical cable connection section, and an optical cable extension section. An end of the insertion section is configured to connect to an optical fiber connector. The optical cable connection section is configured to connect to the traction member connection section through a branch cable fastener. The optical cable extension section refers to a part of the optical cable other than the insertion section and the optical cable connection section. The optical cable extension section is generally long. It should be noted that, one optical cable may have two insertion sections, two optical cable connection sections, and one optical cable extension section. For example, from one end to the other end of the optical cable, the optical cable sequentially includes an insertion section, an optical cable connection section, an optical cable extension section, and an optical cable connection section, and an insertion section. In other words, each of two ends of the prefabricated cable provided in this embodiment of this application may be connected to an optical fiber connector. It should also be noted that, the foregoing division of the optical cable into the insertion section, the optical cable connection section, and the optical cable extension section is merely logical division. In an actual product, there is no actual boundary between the insertion section, the optical cable connection section, and the optical cable extension section.

The optical fiber connector is a device for detachable connection between optical fibers, and can precisely connect two end surfaces of optical fibers, so that light energy output by a transmitting optical fiber can be coupled to a receiving optical fiber to a maximum extent. The prefabricated cable provided in this embodiment of this application may include only one optical fiber connector, or may include a plurality of optical fiber connectors. The optical cable in the prefabricated cable may have only one end connected to the optical fiber connector, or may have two ends each connected to an optical fiber connector. Specifically, each end of the prefabricated cable may be connected to one optical fiber connector, or may be connected to a plurality of optical fiber connectors. It should be noted that, the connection between the optical cable and the optical fiber connector in this embodiment of this application includes a mechanical connection between the cover of the optical cable and the optical fiber connector, and also includes an optical connection between an optical fiber in the optical cable and the optical fiber connector.

The traction member is configured to pull the optical cable According to the invention, the traction member is an optical cable suspension wire.

In the solution shown in this embodiment of this application, when the prefabricated cable provided in this embodiment of this application is used during network construction, construction personnel may pull the prefabricated cable by dragging the traction member with a hand, thereby facilitating operations of the construction personnel. In addition, because the traction member is connected to the optical cable, a force-bearing point during pulling of the prefabricated cable is located on the optical cable instead of the optical fiber connector, thereby reducing a possibility of damage to the optical fiber connector and a junction between the optical fiber connector and the optical cable.

According to the invention, the traction member is an optical cable suspension wire. The traction member further includes a traction member extension section. The traction member extension section is located on a side of the traction member connection section away from the traction section. The optical cable extension section and the traction member extension section are integrated, and the insertion section is separated from the traction section. The branch cable fastener is sleeved on the optical cable connection section and the traction member connection section.

The branch cable fastener is configured to tightly clamp the optical cable suspension wire and the optical cable, or tightly clamp a plurality of branch cables.

In the solution shown where the traction member is an optical cable suspension wire, no other component needs to be added, thereby reducing fabrication costs. In addition, the branch cable fastener is used to tightly clamp the traction member connection section of the traction member (the optical cable suspension wire) and the optical cable connection section together, to prevent the optical cable suspension wire from being further separated from the optical cable, and ensure that the optical cable extension section and the traction member extension section remain in an integrated state, thereby improving an effect of strengthening the optical cable by the optical cable suspension wire.

In a possible implementation, a width of a suspension wire neck of the optical cable suspension wire is greater than 0.3 mm and less than 1 mm, and a height of the suspension wire neck is greater than 0.5 mm and less than 1.5 mm.

The suspension wire neck is a joint part of the optical cable suspension wire and the optical cable.

In the solution shown in this embodiment of this application, a size of the suspension wire neck of the optical cable suspension wire is set to be within the foregoing size range, so that the size of the suspension wire neck is smaller than a size of a conventional suspension wire neck. In this way, the optical cable suspension wire and the optical cable may be stripped manually without using any tool, thereby improving stripping efficiency, and improving efficiency of connecting the optical fiber connector to the optical cable.

In addition, because the optical cable suspension wire and the optical cable do not need to be cut off by using a tool, the jacket of the optical cable is not easily damaged. In this way, tightness of a junction between the optical cable and the optical fiber connector is improved, thereby improving an IP (ingress protection) protection level of the optical fiber connector.

In a possible implementation outside the subject-matter of the claims, the traction member is a traction rope. The branch cable fastener is sleeved on the optical cable connection section. The traction member connection section is connected to the branch cable fastener.

In the solution shown in this comparative embodiment, for an optical cable without an optical cable suspension wire, the traction rope may be added as the traction member.

The branch cable fastener here has two connection holes along an axial direction. The traction section includes a first traction section and a second traction section. The traction member connection section is located between the first traction section and the second traction section. Both the first traction section and the second traction section are separated from the insertion section. A part of the traction member connection section is located in the two connection holes, and the other part of the traction member connection section is located between two ends of the two connection holes away from the optical fiber connector.

The traction rope is securely and conveniently connected to the branch cable fastener by using a connection manner of passing the traction rope through the connection holes on the branch cable fastener. In addition, the traction rope forms the first traction section and the second traction section, making it more convenient for operation personnel to grip and apply force to the traction rope.

In a possible implementation, the branch cable fastener has a streamlined structure along a length direction of the optical cable.

The streamlined structure may mean that the branch cable fastener has a rounded corner structure or a chamfer structure along the length direction.

In the solution shown in this embodiment of this application, with the configuration of the branch cable fastener to have the streamlined structure, when the prefabricated cable is pulled to pass through an obstacle, the branch cable fastener is not easily stuck by the obstacle, thereby improving a capability of the prefabricated cable to pass through the obstacle.

In a possible implementation, a length of the insertion section is greater than 0.5 m and less than 1.5 m.

In the solution shown in this embodiment of this application, setting of the length of the insertion section to be greater than 0.5 m and less than 1.5 m prevents the optical cable suspension wire or a branch cable from affecting fabrication of the optical fiber connector.

In a possible implementation, the prefabricated cable further includes a bundling member. The bundling member wraps the insertion section and the traction section together.

The bundling member may be a rope, a bundling tape, or the like, but is not limited thereto.

In the solution shown in this embodiment of this application, with the configuration of the bundling member to bundle the insertion section and the traction section together, when the prefabricated cable is pulled by using the traction member, the optical fiber connector can better follow the traction member and the optical cable to move, thereby reducing amplitude of shaking of the optical fiber connector, and improving safety of the optical fiber connector.

In a possible implementation, a handle end of the traction section protrudes from a top end of the optical fiber connector, and a distance between the handle end and the top end of the optical fiber connector is less than or equal to 10 mm. Alternatively, the handle end of the traction section recedes from the top end of the optical fiber connector, and the distance between the handle end and the top end of the optical fiber connector is less than or equal to 10 mm. Alternatively, the handle end of the traction section is flush with the top end of the optical fiber connector.

The handle end is an end of the traction section away from the traction member connection section. The top end of the optical fiber connector is an end opposite to a tail end of the optical fiber connector. The tail end of the optical fiber connector is connected to the optical cable.

In the solution shown in this embodiment of this application, with the arrangement of the handle end of the traction section within the foregoing position range, a position of the handle end is substantially close to a position of the optical fiber connector, making it more convenient for construction personnel to pull the prefabricated cable through the traction member.

In a possible implementation, the handle end of the traction section has a handle structure.

The handle end is an end of the traction section away from the traction member connection section. The handle structure may be any structure that is convenient for construction personnel to grip, such as a pull ring, a knob handle, or a grip handle.

In the solution shown in this embodiment of this application, the configuration of the handle end having the handle structure allows operation personnel to conveniently grip the traction section, can more conveniently apply a pulling force.

Beneficial effects are as follows.

The prefabricated cable includes a traction member. A traction member connection section of the traction member is connected to an optical cable connection section of an optical cable. During network construction, construction personnel may pull the prefabricated cable by dragging the traction member with a hand. Because the traction member is connected to the optical cable, a force-bearing point during pulling of the prefabricated cable is located on the optical cable, thereby reducing a possibility of damage to the optical fiber connector and a junction between the optical fiber connector and the optical cable.

### BRIEF DESCRIPTION OF DRAWINGS

FIG. 1 is a schematic diagram of a prefabricated cable according to an embodiment of this application;
FIG. 2 is a schematic diagram of another prefabricated cable according to an embodiment of this application;
FIG. 3 is a schematic diagram of a branch cable fastener according to an embodiment outside the subject-matter of the claims.
FIG. 4 is a schematic diagram of a branch cable fastener according to an embodiment outside the subject-matter of the claims.
FIG. 5 is a profile diagram of an optical cable without an optical cable suspension wire according to an embodiment of this application; and
FIG. 6 is a profile diagram of an optical cable with an optical cable suspension wire according to an embodiment of this application.

Description of reference numerals
1. optical cable; 11. insertion section; 12. optical cable connection section; 13. optical cable extension section;
2. optical fiber connector;
3. traction member; 31. traction section; 310. handle end; 311. first traction section; 312; second traction section; 32. traction member connection section; 33. traction member extension section;
4. branch cable fastener; 41. connection hole;
5. bundling member.

### DESCRIPTION OF EMBODIMENTS

The invention provides a prefabricated cable in accordance with claim 1.

Preferred embodiments are defined in the dependent claims.

The prefabricated cable may be used in construction of a network such as an optical distribution network (optical distribution network, ODN).

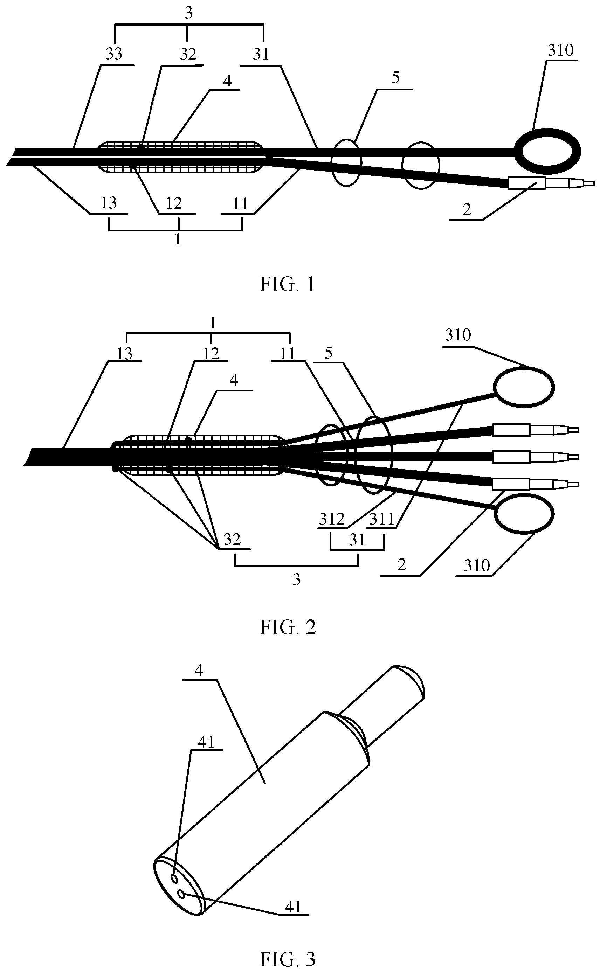

An embodiment of this application provides a prefabricated cable. As shown in FIG. 1 and FIG. 2, the prefabricated cable includes an optical cable 1, an optical fiber connector 2, a traction member 3, and a branch cable fastener 4. The optical cable 1 sequentially includes an insertion section 11, an optical cable connection section 12, and an optical cable extension section 13. The optical fiber connector 2 is connected to an end of the insertion section 11. The traction member 3 includes a traction section 31 and a traction member connection section 32. The traction member connection section 32 is connected to the optical cable connection section 12 through the branch cable fastener 4. The insertion section 11 and the traction section 31 extend in a same direction.

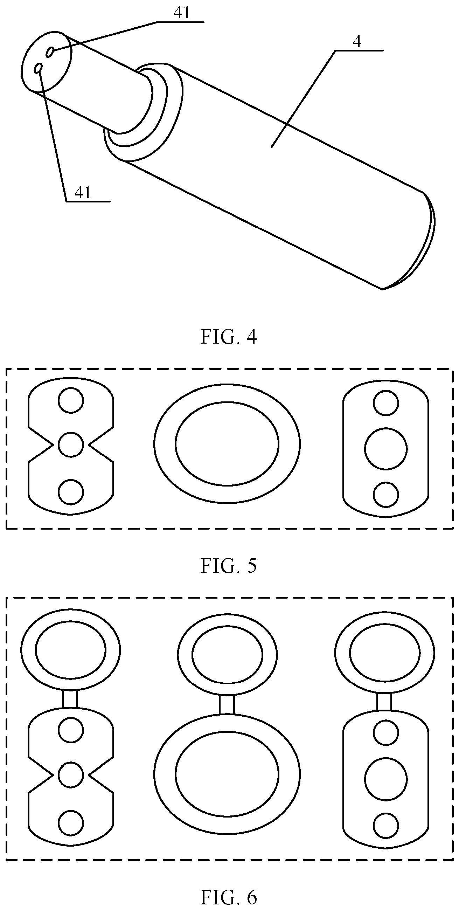

The optical cable 1 is a communication cable component that is manufactured to meet optical, mechanical, and environmental performance specifications, uses one or more optical fibers in a jacket as a transmission medium, and can be used independently or in a group. Based on forms of optical cables, optical cables may be classified into an optical cable with an optical cable suspension wire (such as a figure 8 optical cable) and an optical cable without an optical cable suspension wire (such as a flat drop cable). When an optical cable with an optical cable suspension wire is in an initial state, the optical cable suspension wire is combined with the optical cable along a length direction. A function of the optical cable suspension wire is to ensure that the optical cable can bear its own weight under gravity and an external load in an aerial (or referred to as suspended) state, to strengthen the optical cable. An optical cable without an optical cable suspension wire has high material strength, and can bear its own weight under gravity and an external load in an aerial mode even without an optical cable suspension wire. The optical cable 1 provided in this embodiment of this application may have an optical cable suspension wire, or may not have an optical cable suspension wire. This is not specifically limited in this application. FIG. 5 is a profile diagram (a cross-sectional view) of an optical cable without an optical cable suspension wire according to an embodiment of this application. FIG. 6 is a profile diagram (a cross-sectional view) of an optical cable with an optical cable suspension wire according to an embodiment of this application.

An optical cable 1 provided in an embodiment of this application sequentially includes an insertion section 11, an optical cable connection section 12, and an optical cable extension section 13. An end of the insertion section 11 is configured to connect to an optical fiber connector 2. The optical cable connection section 12 is configured to connect to the traction member connection section 32 through a branch cable fastener 4. The optical cable extension section 13 refers to a part of the optical cable 1 other than the insertion section 11 and the optical cable connection section 12. The optical cable extension section 13 is generally long. It should be noted that, one optical cable may have two insertion sections 11, two optical cable connection sections 12, and one optical cable extension section 13. For example, from one end to the other end of the optical cable, the optical cable sequentially includes an insertion section 11, an optical cable connection section 12, an optical cable extension section 13, an optical cable connection section 12, and an insertion section 11. In other words, each of two ends of the prefabricated cable provided in this embodiment of this application may be connected to an optical fiber connector 2. It should also be noted that, the foregoing division of the optical cable 1 into the insertion section 11, the optical cable connection section 12, and the optical cable extension section 13 is merely logical division. In an actual product, there is no actual boundary between the insertion section 11, the optical cable connection section 12, and the optical cable extension section 13.

The optical fiber connector 2 is a device for detachable connection between optical fibers, and can precisely connect two end surfaces of optical fibers, so that light energy output by a transmitting optical fiber can be coupled to a receiving optical fiber to a maximum extent. The prefabricated cable provided in this embodiment of this application may include only one optical fiber connector 2, or may include a plurality of optical fiber connectors 2. The optical cable 1 in the prefabricated cable may have only one end connected to the optical fiber connector 2 (in other words, has only one insertion section 11), or may have two ends each connected to an optical fiber connector 2 (in other words, has two insertion sections 11). Specifically, each end of the prefabricated cable may be connected to one optical fiber connector 2 (as shown in FIG. 1), or may be connected to a plurality of optical fiber connectors 2 (as shown in FIG. 2). It should be noted that, the connection between the optical cable 1 and the optical fiber connector 2 in this embodiment of this application includes a mechanical connection between the jacket of the optical cable 1 and the optical fiber connector 2, and also includes an optical connection between an optical fiber in the optical cable 1 and the optical fiber connector 2.

The traction member 3 is configured to pull the optical cable 1. The traction member is an optical cable suspension wire. The traction member 3 includes a traction section 31 and a traction member connection section 32. The traction section 31 and the insertion section 11 extend in a same direction. The traction member connection section 32 is connected to the optical cable connection section 12 through the branch cable fastener 4. A handle end 310 of the traction section 31 may have a handle structure (where the handle end 310 is an end of the traction section 31 away from the traction member connection section 32), making it convenient for construction personnel to grip and apply force to the traction member 3. For example, the handle structure may be any structure that is convenient for construction personnel to grip, such as a pull ring, a knob handle, or a grip handle. A position of the handle end 310 may be close to a position of the optical fiber connector 2. It should be noted that, the foregoing division of the traction member 3 into the traction section 31 and the traction member connection section 32 is merely logical division. In an actual product, there is no actual boundary between the traction section 31 and the traction member connection section 32.

The branch cable fastener 4 is configured to tightly clamp the optical cable suspension wire and the optical cable together, so as to prevent the optical cable suspension wire from being separated from the optical cable. Alternatively, the branch cable fastener 4 is configured to fix a plurality of branch cables together to prevent the plurality of branch cables from being separated.

In the solution shown in this embodiment of this application, when the prefabricated cable provided in this embodiment of this application is used during network construction, construction personnel may pull the prefabricated cable by dragging the traction member 3 with a hand, thereby facilitating operations of the construction personnel. In addition, because the traction member 3 is connected to the optical cable 1, a force-bearing point during pulling of the prefabricated cable is located on the optical cable 1 instead of the optical fiber connector 2, thereby reducing a possibility of damage to the optical fiber connector 2 and a junction between the optical fiber connector 2 and the optical cable 1.

The following describes the prefabricated cable provided in this embodiment of this application in more detail by using an example in which the optical cable 1 has an optical cable suspension wire and an example in which the optical cable 1 does not have an optical cable suspension wire.

(1) According to the invention, the traction member 3 is an optical cable suspension wire.

According to the invention and as shown in FIG. 1, the traction member 3 further includes a traction member extension section 33. The traction member extension section 33 is located on a side of the traction member connection section 32 away from the traction section 31. The optical cable extension section 13 and the traction member extension section 33 are integrated, and the insertion section 11 is separated from the traction section 31. The branch cable fastener is sleeved on the optical cable connection section 12 and the traction member connection section 32.

In a related technology, during fabrication of a prefabricated cable, to facilitate connection between an optical fiber connector and an end of an optical cable, a part of an optical cable suspension wire is usually cut off, so that an end of the optical cable and a segment of a cable body connected to the end are separated from the optical cable suspension wire. This part may be referred to as an insertion section of the cable.

During fabrication of the prefabricated cable provided in this embodiment of this application, the insertion section 11 of the optical cable 1 also needs to be separated from the optical cable suspension wire. However, because the optical cable suspension wire needs to be used as the traction member 3, the optical cable suspension wire is not cut off during fabrication, but instead, the optical cable suspension wire combined with the insertion section 11 is stripped, the stripped optical cable suspension wire is placed aside, and then the optical fiber connector 2 is connected to the optical cable 1. A part of the stripped optical cable suspension wire is separated from the insertion section 11, and this part may be referred to as the traction section 31.

To facilitate stripping of the optical cable suspension wire and the optical cable 1, a width of a suspension wire neck of the optical cable 1 in the prefabricated cable is greater than 0.3 mm and less than 1 mm. The suspension wire neck is a joint part of the optical cable suspension wire and the optical cable 1.

A size of the suspension wire neck of the optical cable suspension wire is set to be within the foregoing size range, so that the size of the suspension wire neck is smaller than a size of a conventional suspension wire neck. In this way, the optical cable suspension wire and the optical cable 1 may be stripped manually without using any tool, thereby improving stripping efficiency, and improving efficiency of connecting the optical fiber connector 2 to the optical cable 1. In addition, because the optical cable suspension wire and the optical cable 1 do not need to be cut off by using a tool, the jacket of the optical cable 1 is not easily damaged. In this way, tightness of a junction between the insertion section 11 and the optical fiber connector 2 is improved, thereby improving an IP protection level of the optical fiber connector 2.

To prevent the optical cable suspension wire from being separated from the optical cable 1 without limitation, the branch cable fastener 4 may be used to tightly clamp the traction member connection section 32 of the traction member 3 and the optical cable connection section 12 of the optical cable 1 together.

As shown in FIG. 2, the branch cable fastener 4 is sleeved on the optical cable connection section 12, and the traction member connection section 32 is connected to the branch cable fastener 4.

For example, the branch cable fastener 4 has two connection holes 41 along an axial direction. The traction section 31 includes a first traction section 311 and a second traction section 312. The traction member connection section 32 is located between the first traction section 311 and the second traction section 312. Both the first traction section 311 and the second traction section 312 are separated from the insertion section 11. A part of the traction member connection section 32 is located in the two connection holes 41, and the other part of the traction member connection section 32 is located between two ends of the two connection holes 41 away from the optical fiber connector 2.

FIG. 3 and FIG. 4 are schematic diagrams of a branch cable fastener 4 according to an embodiment outside the subject-matter of the claims. The branch cable fastener 4 has two connection holes 41 along an axial direction. To connect a traction rope, the traction rope is passed through the two connection holes 41 in sequence, and then two handle structures are formed at two ends of the traction rope. It should be noted that, a related structure in which the branch cable fastener 4 is sleeved on the optical cable connection section 12 is not shown in FIG. 3 and FIG. 4.

To facilitate connection between the optical fiber connector 2 and the end of the insertion section 11, a length of the insertion section 11 cannot be excessively short; otherwise, fabrication of the optical fiber connector 2 may be affected. For example, for an optical cable with an optical cable suspension wire, if the insertion section 11 is excessively short, the optical cable suspension wire affects fabrication of the optical fiber connector 2. In a possible implementation, the length of the insertion section 11 is greater than 0.5 m and less than 1.5 m. More specifically, the length of the insertion section 11 is greater than 0.5 m and less than 1 m.

To improve a capability of the prefabricated cable to pass through an obstacle, in a possible implementation, the branch cable fastener 4 has a streamlined structure along a length direction of the optical cable 1.

The streamlined structure may mean that the branch cable fastener 4 has a rounded corner structure or a chamfer structure along the length direction.

With the configuration of the branch cable fastener 4 to have the streamlined structure, when the prefabricated cable is pulled to pass through an obstacle, the branch cable fastener 4 is not easily stuck by the obstacle, thereby improving the capability of the prefabricated cable to pass through the obstacle.

To better pull the prefabricated cable, the prefabricated cable further includes a bundling member 5. The bundling member 5 wraps the insertion section 11 and the traction section 31 together.

The bundling member 5 may be a rope, a bundling tape, or the like, but is not limited thereto.

With the configuration of the bundling member 5 to bundle the insertion section 11 and the traction section 31 together, when the prefabricated cable is pulled by using the traction member 3, the optical fiber connector 2 can better follow the traction member 3 and the optical cable 1 to move, thereby reducing amplitude of shaking of the optical fiber connector 2 and improving safety of the optical fiber connector 2.

In a state in which the insertion section 11 and the traction section 31 are bundled through the bundling member 5, a position of the handle end 310 may be close to a position of the optical fiber connector 2, making it more convenient for construction personnel to pull the prefabricated cable.

For example, the handle end 310 protrudes from a top end of the optical fiber connector 2, and a distance between the handle end 310 and the top end of the optical fiber connector 2 is less than or equal to 10 mm. Alternatively, the handle end 310 recedes from the top end of the optical fiber connector 2, and the distance between the handle end 310 and the top end of the optical fiber connector 2 is less than or equal to 10 mm. Alternatively, a top end of the handle end 310 is flush with the top end of the optical fiber connector 2.

## Claims

1. A prefabricated cable, comprising an optical cable (1), an optical fiber connector (2), a traction member (3), and a branch cable fastener (4), wherein
the optical cable (1) sequentially comprises an insertion section (11), an optical cable connection section (12), and an optical cable extension section (13), and the optical fiber connector (2) is connected to an end of the insertion section (11);
the traction member (3) comprises a traction section (31) and a traction member connection section (32);
the traction member connection section (32) is connected to the optical cable connection section (12) through the branch cable fastener (4), and the insertion section (11) and the traction section (31) extend in a same direction;
wherein the traction member (3) is an optical cable suspension wire;
the traction member (3) further comprises a traction member extension section (33), and the traction member extension section (33) is located on a side of the traction member connection section (32) away from the traction section (31);
the optical cable extension section (13) and the traction member extension section (33) are integrated, and the insertion section (11) is separated from the traction section (31); and
the branch cable fastener (4) is sleeved on the optical cable connection section (12) and the traction member connection section (32).

2. The prefabricated cable according to claim 1, wherein a width of a suspension wire neck of the optical cable suspension wire is greater than 0.3 mm and less than 1 mm, and a height of the suspension wire neck of the optical cable suspension wire is greater than 0.5 mm and less than 1.5 mm.

3. The prefabricated cable according to claim 1 or 2, wherein the branch cable fastener (4) has a streamlined structure along a length direction of the optical cable (1).

4. The prefabricated cable according to claim 1 or 2, wherein a length of the insertion section (11) is greater than 0.5 m and less than 1.5 m.

5. The prefabricated cable according to claim 1 or 2, wherein the prefabricated cable further comprises a bundling member (5), and the bundling member (5) wraps the insertion section (11) and the traction section (31) together.

6. The prefabricated cable according to claim 5, wherein a handle end (310) of the traction section (31) protrudes from a top end of the optical fiber connector (2), and a distance between the handle end (310) and the top end of the optical fiber connector (2) is less than or equal to 10 mm; or
a handle end (310) of the traction section (31) recedes from a top end of the optical fiber connector (2), and a distance between the handle end (310) and the top end of the optical fiber connector (2) is less than or equal to 10 mm; or
a handle end (310) of the traction section (31) is flush with a top end of the optical fiber connector (2), wherein
the handle end (310) is an end of the traction section (31) away from the traction member connection section (32).

7. The prefabricated cable according to claim 1 or 2, wherein a handle end (310) of the traction section (31) has a handle structure, and the handle end (310) is an end of the traction section (31) away from the traction member connection section (32).

## Patentansprüche

1. Vorgefertigtes Kabel, das ein optisches Kabel (1), einen optischen Faserverbinder (2), ein Zugbauteil (3) und ein Abzweigkabelbefestigungselement (4) umfasst, wobei das optische Kabel (1) nacheinander einen Einführabschnitt (11), einen Verbindungsabschnitt (12) des optischen Kabels und einen Verlängerungsabschnitt (13) des optischen Kabels umfasst, und der optische Faserverbinder (2) mit einem Ende des Einführabschnitts (11) verbunden ist;
das Zugbauteil (3) einen Zugabschnitt (31) und einen Zugbauteilverbindungsabschnitt (32) umfasst;
der Zugbauteilverbindungsabschnitt (32) über das Abzweigkabelbefestigungselement (4) mit dem Verbindungsbereich (12) des optischen Kabels verbunden ist, und der Einführabschnitt (11) und der Zugabschnitt (31) sich in eine selbe Richtung verlängern; wobei das Zugbauteil (3) ein Tragseil für ein optisches Kabel ist;
das Zugbauteil (3) ferner einen Zugbauteilverlängerungsabschnitt (33) umfasst, und der Zugbauteilverlängerungsabschnitt (33) auf einer von dem Zugabschnitt (31) abgewandten Seite des Zugbauteilverlängerungsabschnitts (32) gelegen ist;
der Verlängerungsabschnitt (13) des optischen Kabels und der Zugbauteilverlängerungsabschnitt (33) integriert sind, und der Einführabschnitt (11) von dem Zugabschnitt (31) getrennt ist; und
das Abzweigkabelbefestigungselement (4) auf den Verbindungsabschnitt (12) des optischen Kabels und den Zugbauteilverbindungsabschnitt (32) aufgeschoben ist.

2. Vorgefertigtes Kabel nach Anspruch 1, wobei eine Breite eines Tragseilhalses des Tragseils des optischen Kabels größer als 0,3 mm und kleiner als 1 mm ist und eine Höhe des Tragseilhalses des Tragseils des optischen Kabels größer als 0,5 mm und kleiner als 1,5 mm ist.

3. Vorgefertigtes Kabel nach Anspruch 1 oder 2, wobei das Abzweigkabelbefestigungselement (4) entlang einer Längsrichtung des optischen Kabels (1) eine stromlinienförmige Struktur aufweist.

4. Vorgefertigtes Kabel nach Anspruch 1 oder 2, wobei eine Länge des Einführabschnitts (11) größer als 0,5 m und kleiner als 1,5 m ist.

5. Vorgefertigtes Kabel nach Anspruch 1 oder 2, wobei das vorgefertigte Kabel ferner ein Bündelungsbauteil (5) umfasst, und das Bündelungsbauteil (5) den Einführabschnitt (11) und den Zugabschnitt (31) zusammen umwickelt.

6. Vorgefertigtes Kabel nach Anspruch 5, wobei ein Griffende (310) des Zugabschnitts (31) von einem oberen Ende des optischen Faserverbinders (2) vorsteht und ein Abstand zwischen dem Griffende (310) und dem oberen Ende des optischen Faserverbinders (2) kleiner als oder gleich 10 mm ist; oder
ein Griffende (310) des Zugabschnitts (31) gegenüber einem oberen Ende des optischen Faserverbinders (2) zurückgesetzt ist und ein Abstand zwischen dem Griffende (310) und dem oberen Ende des optischen Faserverbinders (2) kleiner als oder gleich 10 mm ist; oder
ein Griffende (310) des Zugabschnitts (31) mit einem oberen Ende des optischen Faserverbinders (2) bündig ist, wobei
das Griffende (310) ein Ende des Zugabschnitts (31), das von dem Zugbauteilverbindungsabschnitt (32) abgewandt ist, ist.

7. Vorgefertigtes Kabel nach Anspruch 1 oder 2, wobei ein Griffende (310) des Zugabschnitts (31) eine Griffstruktur aufweist, und das Griffende (310) ein Ende des Zugabschnitts (31), das von dem Zugbauteilverbindungsabschnitt (32) abgewandt ist, ist.

## Revendications

1. Câble préfabriqué, comprenant un câble optique (1), un connecteur de fibre optique (2), un élément de traction (3), et un élément de fixation de câble de dérivation (4), dans lequel
le câble optique (1) comprend séquentiellement une section d'insertion (11), une section de liaison de câble optique (12), et une section d'extension de câble optique (13), et le connecteur de fibre optique (2) est relié à une extrémité de la section d'insertion (11) ;
l'élément de traction (3) comprend une section de traction (31) et une section de liaison d'élément de traction (32) ;
la section de liaison d'élément de traction (32) est reliée à la section de liaison de câble optique (12) par le biais de l'élément de fixation de câble de dérivation (4), et la section d'insertion (11) et la section de traction (31) s'étendent dans une même direction ;
dans lequel l'élément de traction (3) est un fil de suspension de câble optique ; l'élément de traction (3) comprend en outre une section d'extension d'élément de traction (33), et la section d'extension d'élément de traction (33) est située sur un côté de la section de liaison d'élément de traction (32) éloigné de la section de traction (31) ;
la section d'extension de câble optique (13) et la section d'extension d'élément de traction (33) sont intégrées, et la section d'insertion (11) est séparée de la section de traction (31) ; et
l'élément de fixation de câble de dérivation (4) est enfilé sur la section de liaison de câble optique (12) et la section de liaison d'élément de traction (32).

2. Câble préfabriqué selon la revendication 1, dans lequel une largeur d'un col de fil de suspension du fil de suspension de câble optique est supérieure à 0,3 mm et inférieure à 1 mm, et une hauteur du col de fil de suspension du fil de suspension de câble optique est supérieure à 0,5 mm et inférieure à 1,5 mm.

3. Câble préfabriqué selon la revendication 1 ou 2, dans lequel l'élément de fixation de câble de dérivation (4) a une structure profilée le long d'une direction de longueur du câble optique (1).

4. Câble préfabriqué selon la revendication 1 ou 2, dans lequel une longueur de la section d'insertion (11) est supérieure à 0,5 m et inférieure à 1,5 m.

5. Câble préfabriqué selon la revendication 1 ou 2, dans lequel le câble préfabriqué comprend en outre un élément de regroupement (5), et l'élément de regroupement (5) enveloppe la section d'insertion (11) et la section de traction (31) ensemble.

6. Câble préfabriqué selon la revendication 5, dans lequel une extrémité de poignée (310) de la section de traction (31) fait saillie depuis une extrémité supérieure du connecteur de fibre optique (2), et une distance entre l'extrémité de poignée (310) et l'extrémité supérieure du connecteur de fibre optique (2) est inférieure ou égale à 10 mm ; ou
une extrémité de poignée (310) de la section de traction (31) est en retrait par rapport à une extrémité supérieure du connecteur de fibre optique (2), et une distance entre l'extrémité de poignée (310) et l'extrémité supérieure du connecteur de fibre optique (2) est inférieure ou égale à 10 mm ; ou
une extrémité de poignée (310) de la section de traction (31) affleure une extrémité supérieure du connecteur de fibre optique (2), dans lequel l'extrémité de poignée (310) est une extrémité de la section de traction (31) éloignée de la section de liaison d'élément de traction (32).

7. Câble préfabriqué selon la revendication 1 ou 2, dans lequel une extrémité de poignée (310) de la section de traction (31) a une structure de poignée, et l'extrémité de poignée (310) est une extrémité de la section de traction (31) éloignée de la section de liaison d'élément de traction (32).
